Europäisches Patentamt

European Patent Office

Office européen des brevets

(19)

(11) **EP 1 304 344 A1**

(12) **EUROPEAN PATENT APPLICATION**
published in accordance with Art. 158(3) EPC

(43) Date of publication:
**23.04.2003 Bulletin 2003/17**

(21) Application number: **01951913.1**

(22) Date of filing: **18.07.2001**

(51) Int Cl.⁷: **C08G 64/30**

(86) International application number:
**PCT/JP01/06227**

(87) International publication number:
**WO 02/008312 (31.01.2002 Gazette 2002/05)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.07.2000 JP 2000221984**

(71) Applicant: **TEIJIN LIMITED**
**Osaka-shi Osaka 541-0054 (JP)**

(72) Inventors:
• **HAGA, Hironori c/o Teijin Limited**
**Iwakuni-shi Yamaguchi 740-0014 (JP)**
• **KATSUDA, Takeshi c/o Teijin Limited**
**Iwakuni-shi Yamaguchi 740-0014 (JP)**
• **SUZUKI, Hirotaka c/o Teijin Limited**
**Iwakuni-shi Yamaguchi 740-0014 (JP)**

(74) Representative: **Hallybone, Huw George et al**
**Carpmaels and Ransford,**
**43 Bloomsbury Square**
**London WC1A 2RA (GB)**

(54) **METHOD FOR PRODUCING POLYCARBONATE**

(57)    The present invention relates to a process for the production of an aromatic polycarbonate by a polycondensation reaction or a solid phase polymerization reaction under a flow of an inert gas, wherein an alcohol or a phenol, which is produced as a by-product, is separated from the inert gas using a scrubber. In accordance with the present invention, since the by-product can be separated efficiently, an aromatic polycarbonate can be produced under a flow of an inert gas by an efficient and simplified process.

*FIG.1*

## Description

Technical Field

The present invention relates to a process for the production of an aromatic polycarbonate and, more particularly, a process for the production of an aromatic polycarbonate under a flow of an inert gas, wherein an aromatic polycarbonate can be efficiently produced by separating and removing an alcohol or a phenol, which is produced as a reaction by-product, from the inert gas using a scrubber.

Background Art

With regard to a process for the production of a polycarbonate by a polycondensation reaction, it is necessary to remove a by-product that is produced by the reaction from the reaction system. In this case, in general, a method in which the interior of a polymerization reactor is evacuated is most commonly used. However, this method has the problem that it is necessary to employ a highly air-tight polymerization reaction device in order to maintain the reaction system at high vacuum so imposing a high cost on the production equipment.

As an alternative to the above-mentioned method in which the interior of the polymerization reactor is evacuated, a method in which a polycondensation reaction is carried out under low vacuum or atmospheric pressure by circulating an inert gas within the polymerization reactor so as to remove a reaction-produced by-product together with the inert gas from the reaction system is also well known.

Japanese Patent Application Laid-open No. 6-206996 discloses a method in which, when a molten material containing a diphenol, a carbonate diaryl ester and, as necessary, a branching agent is subjected to a transesterification reaction at a temperature of 130°C to 400°C in the presence of a catalyst to produce an aromatic polycarbonate, an inert gas is mixed with the molten material or passed over the molten material.

Although this method has the advantage that it is unnecessary to maintain the polymerization reaction system at high vacuum, it is necessary to separate and remove the by-product from the gaseous mixture of the by-product and the inert gas.

It is also necessary to employ a device having an extremely large heat exchange area in order to separate a condensing material such as the by-product that is produced by the aromatic polycarbonate reaction from a non-condensing gas such as the inert gas.

Since the conventional method employs a surface condenser having a jacket and/or a coil, a large heat exchange area is required, it is necessary to use either a very large-scale condenser or a combination of multiple condensers, and there is the problem that the equipment cost increases.

In order to solve the above-mentioned problems, Japanese Patent Application Laid-open No. 6-65367 discloses a process for the production of an aromatic polycarbonate from an aromatic dihydroxy compound and an aromatic carbonate diester that employs, as a method of separating by condensation a by-product, an unreacted substance and/or a low molecular weight polymer from a phenol series compound by-product vapor and an accompanying vapor containing the unreacted substance and/or low molecular weight polymer, a method using a scrubber in which a compound having a vapor pressure of 10 mmHg or less at 190°C is used as a scrubbing liquid.

Japanese Patent Application Laid-open No. 2000-128975 discloses a process for the production of an aromatic polycarbonate by a transesterification method in which a distilled mixture is condensed and dissolved using a scrubber having a scrubbing liquid compound that has (a) a vapor pressure at 190°C of 50 to 500 mmHg and (b) a melting point of 30°C or less and (c) dissolves, at 25°C, at least 5 wt% of an aromatic polycarbonate having a number average molecular weight of 2,500.

Furthermore, USP No. 5,444,148 discloses a process for the production of an aromatic polycarbonate by a transesterification method in which a phenol and a residual monomer are removed concomitantly with an inert gas, and the inert gas that has been used for the removal is washed with diphenyl carbonate.

However, these processes have not yet achieved an efficient separation of a reaction by-product to produce an aromatic polycarbonate.

Disclosure of Invention

It is an object of the present invention to eliminate the above-mentioned problems of the conventional polymerization reaction to form an aromatic polycarbonate under a flow of an inert gas and to provide a more efficient process for the production of a polycarbonate.

As a result of an intensive investigation by the present inventors into a process for the production of an aromatic polycarbonate by a polycondensation reaction under a flow of an inert gas, it has been found that an aromatic polycarbonate can be produced in a more efficient and simplified process by separating a by-product alcohol or phenol from the inert gas using a scrubber under specific conditions, and the present invention has thus been accomplished.

That is to say, as described in detail below, the present invention includes two main inventions that are different in terms of the starting materials. That is to say, the present invention includes two main inventions described in 1. and 6. below, one thereof corresponding to where the starting materials are an aromatic dihydroxy compound and a carbonate diester and the other thereof corresponding to where the starting material is an oligomer of an aromatic polycarbonate.

The first invention of the present invention is as follows.

1. A process for the production of an aromatic polycarbonate in which an aromatic dihydroxy compound and a carbonate diester are subjected to a polycondensation reaction under a flow of an inert gas at a reaction pressure of at least 15 kPa and at most 1,000 kPa, characterized in that an alcohol or a phenol that is produced as a by-product of the reaction is separated from the inert gas using a scrubber.

The 'reaction pressure' referred to in the present invention denotes the internal pressure of a polycondensation reactor while producing an aromatic polycarbonate.

Main preferred modes for carrying out the above-mentioned first invention are listed below.

2. The production process according to the above-mentioned 1. wherein a scrubbing liquid used for the scrubber comprises principally a compound X that is the same as either the alcohol or the phenol that is produced as a by-product of the reaction between the aromatic dihydroxy compound and the carbonate diester.

3. The production process according to the above-mentioned 2. wherein the temperature of the scrubbing liquid that is supplied to the scrubber is at least the solidifying point of the compound X and at most the temperature at which the vapor pressure of the compound X is 40 kPa.

4. The production process according to any one of the above-mentioned 1. to 3. wherein the carbonate diester is an aromatic carbonate diester.

5. The production process according to either one of the above-mentioned 2. or 3. wherein the compound X is phenol.

The second invention of the present invention is as follows.

6. A process for the production of an aromatic polycarbonate in which a crystallized aromatic polycarbonate is subjected to a polycondensation reaction under a flow of an inert gas at a reaction pressure of at least 15 kPa and at most 1,000 kPa, characterized in that an alcohol or a phenol that is produced as a by-product of the reaction is separated from the inert gas using a scrubber.

Main preferred modes for carrying out the above-mentioned second invention are listed below.

7. The production process according to the above-mentioned 6. wherein a scrubbing liquid used for the scrubber comprises principally a compound Y that is the same as either the alcohol or the phenol that is produced as a by-product of the reaction of the crystallized aromatic polycarbonate.

8. The production process according to the above-mentioned 7. wherein the temperature of the scrubbing liquid that is supplied to the scrubber is at least the solidifying point of the compound Y and at most the temperature at which the vapor pressure of the compound Y is 40 kPa.

9. The production process according to either one of the above-mentioned 7. or 8. wherein the compound Y is phenol.

Best Mode for Carrying Out the Invention

The first and second inventions of the present invention are described in detail below by reference to drawings.

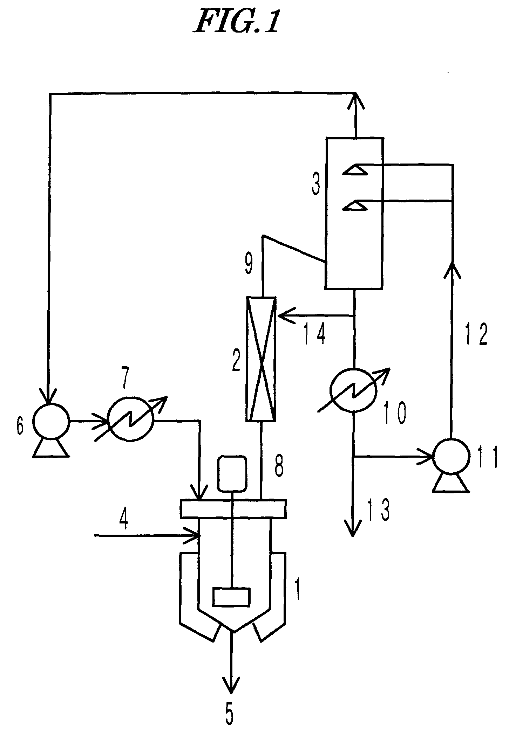

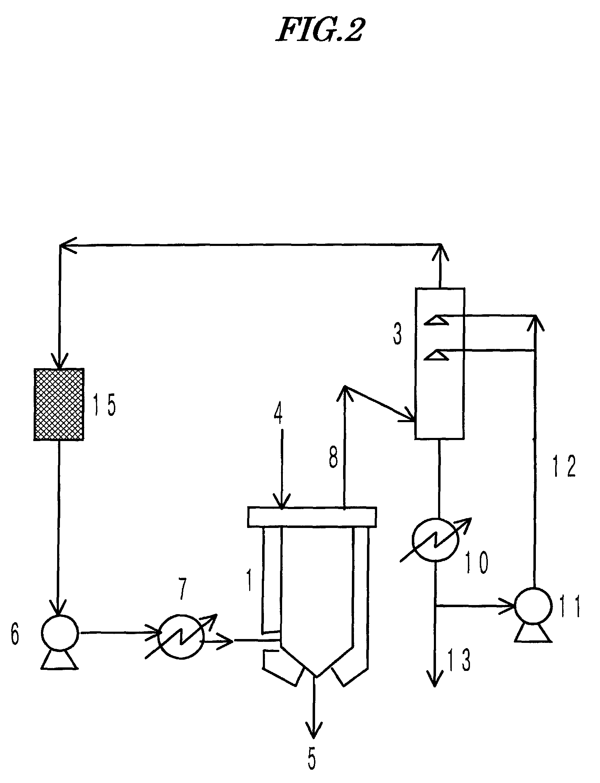

An embodiment of the production process or production method for an aromatic polycarbonate of the present invention and, in particular, a separation process for a reaction by-product using a scrubber that is a characteristic of the present invention is shown in FIG. 1 for a case where an aromatic polycarbonate is produced by a melt polymerization method, which is the first invention, and in FIG. 2 for a case where an aromatic polycarbonate is produced by a solid phase polymerization method, which is the second invention.

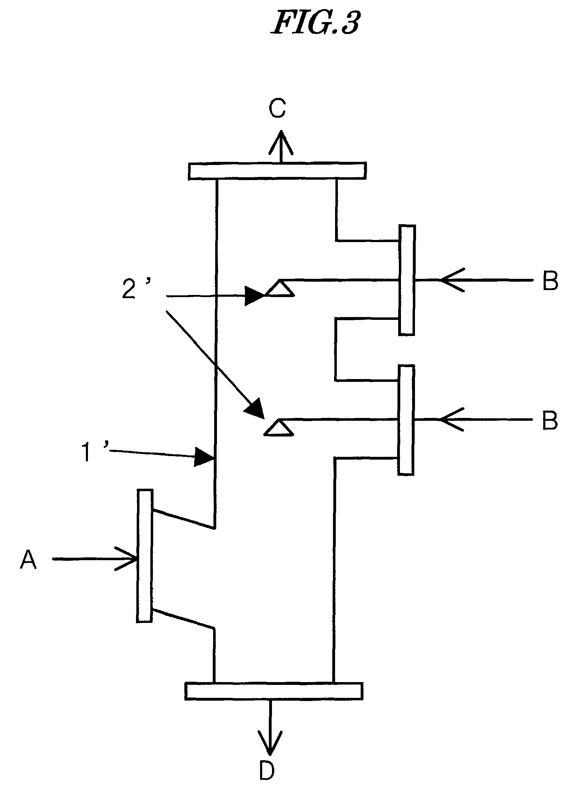

Moreover, an example of a spray system scrubber is shown in FIG. 3.

These figures merely show one mode for carrying out the present invention, and other appropriately modified modes are of course included in the scope of the present invention. For example, a horizontal type polymerization reactor can also be used instead of the vertical type polymerization reactor shown in FIGS. 1 and 2 and a case where the rectifier shown in FIG. 1 is not used is also included in the scope of the present invention. The present invention can be applied to any polycondensation method such as a batchwise method or a continuous method, and in the case of either a batchwise or a continuous method it is not essential to apply the present invention to all stages from supplying a starting material to obtaining a product and the present invention can be applied to at least one of the stages for the production of an aromatic polycarbonate.

FIG. 1 shows one embodiment of the process for the production of an aromatic polycarbonate by a melt polymerization method.

The production process by the melt polymerization method includes as main components a polymerization reactor 1, a rectifier 2 and a scrubber 3. An aromatic dihydroxy compound and a carbonate diester, which are starting materials, a catalyst and/or a low molecular weight polycarbonate (which is a starting material in the case where the present invention is applied to an intermediate stage of the polymerization) are supplied continuously or batchwise to the polymerization reactor 1 from a starting material supply pipeline 4. The temperature of the polymerization reaction is preferably 150 to 350°C. When the temperature is less than this range it is difficult for the reaction to proceed smoothly, and when the temperature exceeds 350°C undesirable side reactions such as branching tend to occur.

When the starting materials are supplied continuously to the polymerization reactor, the reaction mixture that has been polycondensed to some extent within the polymerization reactor is discharged continuously or batchwise via a reaction mixture discharge pipeline 5.

The aromatic polycarbonate oligomer discharged here can be used in a production process that uses a crystallized aromatic polycarbonate as a starting material.

An inert gas that flows into the polymerization reactor 1 is circulated within the reaction system through the rectifier 2 and the scrubber 3 by a gas circulation pump 6. Furthermore, fresh inert gas can be supplied to the circulation system as necessary. The inert gas is heated by a heater 7 and made to flow into the polymerization reactor. The temperature of the heated inert gas is preferably at least the polycondensation reaction temperature and at most 350°C. When the temperature of the inert gas is less than the reaction temperature the reaction rate is undesirably lowered, and when it exceeds 350°C unwanted side reactions such as branching undesirably tend to occur, as is the case with the reaction temperature. The method of making the inert gas flow into the polymerization reactor is not particularly limited, but a method in which the inert gas is injected directly into the reaction mixture is preferred.

The reaction pressure (the pressure of the interior of the polycondensation reactor) is desirably at least 15 kPa and at most 1,000 kPa, preferably at least 90 kPa and at most 300 kPa, and more preferably at least 90 kPa and at most 200 kPa, in order to exploit the characteristics of the circulation of the inert gas. When the pressure is less than the above-mentioned lower limit, a large-scale device for generating a high vacuum and maintaining this vacuum is needed. When the pressure is higher than the above-mentioned upper limit, a burden is imposed on a pump such as a compressor or a blower for circulating the inert gas, which is undesirable.

The 'inert gas' referred to in the present invention means a gas that does not interfere with the polycondensation reaction of an aromatic polycarbonate and, in addition to nitrogen gas, noble gases such as helium and argon can be cited as examples.

With regard to the amount (A (units: kg/hr)) of the inert gas that is circulated into the polymerization reactor, the ratio of A to the amount (B (units: kg/hr)) of carbonate diester added is preferably 0.07 to 7. When it is less than 0.07 the effect of circulating the inert gas is too small and the reaction rate undesirably becomes too low, and when it exceeds 7 there is a possibility that the capacity of equipment such as the scrubber might become huge and impractical.

An alcohol or a phenol that is produced as a by-product in the reaction (hereinafter, called a reaction by-product) is discharged through a vent pipeline 8 of the polymerization reactor accompanying the inert gas together with substances that did not react in the polymerization reactor and then guided to the rectifier 2. In the rectifier 2 the reaction by-product and the unreacted substances are separated from each other and the unreacted substances, which are collected as high boiling point fractions, are returned to the polymerization reactor. On the other hand, the gaseous mixture of the inert gas and the reaction by-product distills out of the top of the rectifier 2 and is guided to the scrubber 3 via the rectifier-scrubber connecting pipeline 9.

FIG. 2 shows one embodiment of the process for the production of an aromatic polycarbonate by a solid phase polymerization method.

The production process by the solid phase polymerization method includes as main components a polymerization reactor 1 and a scrubber 3 as shown in FIG. 2. In the case of the solid phase polymerization method, it is necessary to use as a starting material a crystallized aromatic polycarbonate that is at least partially crystallized (in the present invention, simply called a 'crystallized aromatic polycarbonate'). The viscosity average molecular weight of the crystallized aromatic polycarbonate is not particularly limited, but it is preferably 3,000 to 50,000, and more preferably 5,200 to 22,000. The degree of crystallinity of the crystallized aromatic polycarbonate is about 10% to 70%. The above-mentioned crystallized aromatic polycarbonate, which is a starting material, is supplied from a starting material supply pipeline 4 to the polymerization reactor 1 continuously or batchwise. The polymerization temperature is preferably at least a temperature that is 20°C higher than the glass transition temperature of the crystallized aromatic polycarbonate and at most a temperature that is 5°C lower than the melting point of the crystallized aromatic polycarbonate. When the temperature is less than the above-mentioned lower limit, it is difficult for the reaction to proceed smoothly, and when the temperature exceeds the above-mentioned upper limit the crystals melt and it is difficult to maintain the crystallized aromatic polycarbonate in the solid phase.

When the crystallized aromatic polycarbonate, which is a starting material, is supplied continuously to the polymerization reactor, the reaction mixture that has been polycondensed to some extent within the polymerization reactor is discharged continuously or batchwise via a reaction mixture discharge pipeline 5.

An inert gas that flows into the polymerization reactor 1 is circulated within the reaction system through the scrubber 3 and further, if necessary, through an organic gas adsorption device 15 by a gas circulation pump 6. Furthermore, fresh inert gas can be supplied to the circulation system as necessary. The inert gas is heated by a heater 7 and made to flow into the polymerization reactor. The temperature of the heated inert gas is preferably at least a temperature that is 20°C higher than the glass transition temperature of the crystallized aromatic polycarbonate and at most a temperature that is 5°C lower than the melting point of the crystallized aromatic polycarbonate. When the temperature is less than the above-mentioned range, it is difficult for the reaction to proceed smoothly, and when the temperature exceeds the above-mentioned range the crystals melt and it is difficult to maintain the crystallized aromatic polycarbonate in the solid phase. The method of making the inert gas flow into the polymerization reactor is not particularly limited, but a method in which the inert gas is made to flow from a lower part to an upper part of the polymerization reactor is preferred.

The pressure of the interior of the polymerization reactor (the reaction pressure) is desirably at least 15 kPa and at most 1,000 kPa, preferably at least 90 kPa and at most 500 kPa, and more preferably at least 90 kPa and at most 200 kPa, in order to exploit the characteristics of the circulation of the inert gas. When the pressure is less than the above-mentioned lower limit, a large-scale device for generating a high vacuum and maintaining this vacuum is needed. When the pressure is higher than the above-mentioned upper limit, a burden is imposed on a pump such as a compressor or a blower for circulating the inert gas.

With regard to the amount (A (units: kg/hr)) of the inert gas that is made to flow into the polymerization reactor, the ratio of A to the amount (C (units: kg/hr)) of crystallized aromatic polycarbonate added is preferably 0.07 to 7. When it is less than 0.07 the effect obtained by circulating the inert gas is too small and the reaction rate undesirably becomes too low, and when it exceeds 7 there is a possibility that the capacity of equipment such as the scrubber might become huge and impractical.

An alcohol or a phenol that is produced as a by-product in the reaction (hereinafter, called a reaction by-product) is guided to the scrubber 3 through a vent pipeline 8 of the polymerization reactor accompanying the inert gas together with substances that did not react in the polymerization reactor.

In the present invention the reaction by-product is separated from the inert gas using the scrubber.

In the present invention it is preferable for the scrubbing liquid used for the scrubber to comprise principally a compound X or Y that is the same as either the alcohol or the phenol that is the reaction by-product. 'To comprise principally' referred to here means that the reaction by-product is a principal component of the scrubbing liquid composition, and it is preferably at least 50 mole%, and more preferably at least 80 mole%. In this case, although it is possible to determine by experiment, etc. whether to chose an alcohol or a phenol, it is often advantageous to choose a compound that is distilled in a greater amount since the subsequent treatment becomes easy.

The process for separating and purifying the reaction by-product from the scrubbing liquid that has absorbed the reaction by-product can thereby be simplified. Furthermore, the condensed and liquefied reaction by-product can be used as the scrubbing liquid as it is or as a part of a mixture. The mixing ratio is not particularly limited.

In FIGS. 1 and 2, the temperature of the scrubbing liquid is controlled using a scrubbing liquid temperature controller 10 such as a heat exchanger. The temperature of the scrubbing liquid at the entrance of the scrubber is preferably at least the solidifying point of the compound X or Y in the scrubbing liquid and at most a temperature at which the vapor pressure of the compound X in the scrubbing liquid is 40 kPa. When it is less than this range the liquid solidifies, and on the other hand it is undesirable for the temperature to exceed this range since the scrubber cannot exhibit an adequate separating ability. For instance, when X or Y is phenol, since the solidifying point thereof is 43°C, the temperature at which the vapor pressure thereof becomes 40 kPa is 150°C.

In FIGS. 1 and 2, the temperature-controlled scrubbing liquid is supplied to the scrubber by a scrubbing liquid circulation pump 11 via a scrubbing liquid feed pipeline 12 and made to come into contact with a gaseous mixture of the inert gas and the reaction by-product so as to absorb and separate the reaction by-product from the inert gas. The scrubbing liquid that has absorbed the reaction by-product is again temperature-controlled by the scrubbing liquid temperature controller 10 and supplied to the scrubber but, if necessary, a portion of the scrubbing liquid is discharged from the scrubbing liquid circulation system via a scrubbing liquid discharge pipeline 13. Furthermore, since the scrubbing liquid component is the same as the reaction by-product, a portion of the scrubbing liquid can be used as a reflux liquid in the rectifier and a required amount can therefore be supplied to the rectifier via a reflux liquid feed pipeline 14.

FIG. 3 is a schematic diagram of an embodiment of the spray type scrubber. Within the scrubber tower 1', a scrubbing liquid B that is sprayed by means of spray nozzles 2' comes into contact with a gaseous mixture A of reaction by-product and inert gas so forming a scrubbing liquid D that has absorbed the reaction by-product and an inert gas C containing a reduced amount of the reaction by-product.

The scrubber used in the present invention is not particularly limited; one having a structure that allows good contact between the scrubbing liquid and the gaseous mixture of inert gas and reaction by-product and has a small pressure loss can be used and, for example, a spray type, a packed tower type, a liquid tank splash type, a liquid surface collision type, a venturi type, a cyclone type, etc. can be considered.

The operating pressure of the scrubber in the present invention is desirably approximately equal to the reaction pressure and is at least 15 kPa and at most 1,000 kPa, preferably at least 90 kPa and at most 500 kPa, and more preferably at least 90 kPa and at most 200 kPa.

The present invention can of course employ a combination of a scrubber and another separation technique such as, for example, a surface condenser.

The aromatic polycarbonate referred to in the first invention of the present invention is an aromatic polycarbonate that is obtained by a condensation polymerization reaction of a mixture mainly containing an aromatic dihydroxy compound and a carbonate diester in the presence of a transesterification catalyst, etc. formed from, for example, a nitrogen-containing basic compound, an alkali metal compound and/or an alkaline-earth metal compound.

The aromatic polycarbonate referred to in the second invention is an aromatic polycarbonate that is obtained by using as a starting material a low molecular weight aromatic polycarbonate, that is to say, an oligomer or a prepolymer of an aromatic polycarbonate, crystallizing it and then subjecting it to solid phase polymerization.

A detailed explanation is given below regarding the starting material aromatic dihydroxy compound and carbonate diester, the polycondensation catalyst, etc. that are used in the process for the production of an aromatic polycarbonate of the first invention.

With regard to such aromatic dihydroxy compounds, for example, bis(4-hydroxyphenyl)methane, 2,2-bis(4-hydroxyphenyl)propane, 2,2-bis(4-hydroxy-3-methylphenyl)propane, 4,4-bis(4-hydroxyphenyl) heptane, 2,2-bis(4-hydroxy-3,5-dichlorophenyl) propane, 2,2-bis(4-hydroxy-3,5-dibromophenyl)propane, bis(4-hydroxyphenyl)oxide, bis(3,5-dichloro-4-hydroxyphenyl)oxide, $p,p'$-dihydroxydiphenyl, 3,3'-dichloro-4,4'-dihydroxydiphenyl, bis(hydroxyphenyl)sulfone, resorcinol, hydroquinone, 1,4-dihydroxy-2,5-dichlorobenzene, 1,4-dihydroxy-3-methylbenzene, bis(4-hydroxyphenyl)sulfide, bis(4-hydroxyphenyl)sulfoxide, etc. can be cited, and 2,2-bis(4-hydroxyphenyl)propane is particularly preferred.

With regard to the carbonate diesters, for example, diphenyl carbonate, ditolyl carbonate, bis(chlorophenyl) carbonate, m-cresyl carbonate, dinaphthyl carbonate, bis(diphenyl) carbonate, dimethyl carbonate, diethyl carbonate, dibutyl carbonate, dicyclohexyl carbonate, etc. are used. Among these, diphenyl carbonate is preferred in terms of the reactivity, the stability of the color of the resin product and, furthermore, the cost.

The polycarbonate of the present invention can further contain, as necessary, an aliphatic dihydroxy compound such as, for example, ethylene glycol, 1,4-butanediol, 1,4-cyclohexanedimethanol or 1,10-decanediol, a dicarboxylic acid such as, for example, succinic acid, isophthalic acid, 2,6-naphthalenedicarboxylic acid, adipic acid, cyclohexanecarboxylic acid or terephthalic acid, an oxyacid such as, for example, lactic acid, $p$-hydroxybenzoic acid or 6-hydroxy-2-naphthoic acid.

With regard to the polycondensation catalyst, an alkali metal compound or an alkaline-earth metal compound is preferably used, and an alkali metal compound is particularly preferably used.

With regard to the alkali metal compounds that are used as the catalyst, for example, hydroxides, hydrogencarbonates, carbonates, acetates, nitrates, nitrites, sulfites, cyanates, thiocyanates, stearates, hydrogenborates, benzoates, hydrogenphosphates, bisphenol and phenol salts, etc. of alkali metals can be cited.

With regard to specific examples thereof, sodium hydroxide, potassium hydroxide, lithium hydroxide, sodium hydrogencarbonate, potassium hydrogencarbonate, lithium hydrogencarbonate, sodium carbonate, potassium carbonate, lithium carbonate, sodium acetate, potassium acetate, lithium acetate, sodium nitrate, potassium nitrate, lithium nitrate, sodium nitrite, potassium nitrite, lithium nitrite, sodium sulfite, potassium sulfite, lithium sulfite, sodium cyanate, potassium cyanate, lithium cyanate, sodium thiocyanate, potassium thiocyanate, lithium thiocyanate, sodium stearate, potassium stearate, lithium stearate, sodium hydrogenborate, potassium hydrogenborate, lithium hydrogenborate, sodium phenylborate, potassium phenylborate, lithium phenylborate, sodium benzoate, potassium benzoate, lithium benzoate, disodium hydrogenphosphate, dipotassium hydrogenphosphate, dilithium hydrogenphosphate, the disodium salt, dipotassium salt and dilithium salt of bisphenol A, the sodium salt, potassium salt and lithium salt of phenol, etc. can be cited and, in particular, the disodium salt of bisphenol A and the sodium salt of phenol are most preferred.

With regard to the alkaline-earth metal compounds that are used as the catalyst, for example, hydroxides, hydrogencarbonates, carbonates, acetates, nitrates, nitrites, sulfites, cyanates, thiocyanates, stearates, hydrogenborates, benzoates, bisphenol and phenol salts, etc. of alkaline-earth metals can be cited.

With regard to specific examples thereof, calcium hydroxide, barium hydroxide, strontium hydroxide, calcium hydrogencarbonate, barium hydrogencarbonate, strontium hydrogencarbonate, calcium carbonate, barium carbonate, strontium carbonate, calcium acetate, barium acetate, strontium acetate, calcium nitrate, barium nitrate, strontium nitrate, calcium nitrite, barium nitrite, strontium nitrite, calcium sulfite, barium sulfite, strontium sulfite, calcium cyanate, barium cyanate, strontium cyanate, calcium thiocyanate, barium thiocyanate, strontium thiocyanate, calcium stearate, barium stearate, strontium stearate, calcium hydrogenborate, barium hydrogenborate, strontium hydrogenborate, calcium benzoate, barium benzoate, strontium benzoate, the calcium salt, barium salt and strontium salt of bisphenol A, the calcium salt, barium salt and strontium salt of phenol, etc. can be cited.

The alkali metal compound or alkaline-earth metal compound that is used as the catalyst is preferably used at a ratio such that the alkali metal element or alkaline-earth metal element in the catalyst is present at $1 \times 10^{-8}$ to $5 \times 10^{-5}$ equivalents per mole of the aromatic diol compound. More preferably, the ratio is $5 \times 10^{-7}$ to

$1 \times 10^{-5}$ equivalents on the same basis.

It is undesirable for the amount of alkali metal element or alkaline-earth metal element in the catalyst to exceed the range of $1 \times 10^{-8}$ to $5 \times 10^{-5}$ equivalents per mole of the aromatic dihydroxy compound because there are the problems that various physical properties of the aromatic polycarbonate resin so obtained might be adversely affected, the transesterification reaction does not proceed adequately and a high molecular weight aromatic polycarbonate resin thus cannot be obtained, etc.

With regard to the nitrogen-containing basic compounds that are used as the catalyst, for example, ammonium hydroxides having an alkyl, aryl or alkylaryl group such as tetramethylammonium hydroxide ($Me_4NOH$), tetraethylammonium hydroxide ($Et_4NOH$), tetrabutylammonium hydroxide ($Bu_4NOH$), benzyltrimethylammonium hydroxide ($Ph\text{-}CH_2(Me)_3NOH$) and hexadecyltrimethylammonium hydroxide, tertiary amines such as triethylamine, tributylamine, dimethylbenzylamine and hexadecyldimethylamine, and basic salts such as tetramethylammonium borohydride ($Me_4NBH_4$), tetrabutylammonium borohydride ($Bu_4NBH_4$), tetramethylammonium tetraphenylborate ($Me_4NBPh_4$) and tetrabutylammonium tetraphenylborate ($Bu_4NBPh_4$) can be cited.

The above-mentioned nitrogen-containing basic compound is preferably used at a ratio such that the ammonium nitrogen atom in the nitrogen-containing basic compound is present at $1 \times 10^{-5}$ to $5 \times 10^{-4}$ equivalents per mole of the aromatic dihydroxy compound. More preferably, the ratio is $2 \times 10^{-5}$ to $5 \times 10^{-4}$ equivalents on the same basis. Particularly preferably, the ratio is $5 \times 10^{-5}$ to $5 \times 10^{-4}$ equivalents on the same basis.

In the specification of the present invention, the ratios of the alkali metal compound, alkaline-earth metal compound and nitrogen-containing basic compound relative to the aromatic diol compound (which is the same as the 'aromatic dihydroxy compound') that is added initially are expressed as 'an amount of Z (compound name) at W (value) equivalents as the metal or basic nitrogen atom per mole of the aromatic dihydroxy compound', and this means that when Z is, for example, sodium phenoxide, monosodium 2,2-bis(4-hydroxyphenyl)propane or triethylamine and the number of sodium atoms or basic nitrogen atoms is one, the amount of Z corresponds to W moles, and when Z is disodium 2,2-bis (4-hydroxyphenyl)propane and the number of sodium atoms is two, the amount of Z corresponds to W/2 moles.

In the present invention, if desired, (a) an alkali metal salt of an ate complex of an element belonging to group 14 of the periodic table or (b) an alkali metal salt of an oxoacid of an element belonging to group 14 of the periodic table can be used as the alkali metal compound of the catalyst. The elements belonging to group 14 of the periodic table referred to here denote silicon, germanium and tin.

The use of these alkali metal compounds as a polycondensation catalyst has the advantage that the polycondensation reaction can proceed rapidly and to completion. Furthermore, undesirable side reactions such as branching that are caused during the polycondensation reaction can be suppressed to a low level.

With regard to (a) alkali metal salts of an ate complex of elements belonging to group 14 of the periodic table, there are those described in Japanese Patent Application Laid-open No. 7-268091. More particularly, with regard to compounds of germanium (Ge), NaGe ($OMe)_5$, NaGe($OEt)_3$, NaGe($OPr)_5$, NaGe($OBu)_5$, NaGe($OPh)_5$, LiGe($OMe)_5$, LiGe($OBu)_5$ and LiGe ($OPh)_5$ can be cited.

With regard to compounds of tin (Sn), NaSn ($OMe)_3$, NaSn($OMe)_2(OEt)$, NaSn($OPr)_3$, NaSn($O$-$n$-$C_6H_{13})_3$, NaSn($OMe)_5$, NaSn($OEt)_5$, NaSn($OBu)_5$, NaSn($O$-$n$-$C_{12}H_{25})_5$, NaSn($OEt)_3$, NaSn($OPh)_5$ and NaSnBu$_2(OMe)_3$ can be cited.

With regard to (b) alkali metal salts of an oxoacid of elements belonging to group 14 of the periodic table, alkali metal salts of silicic acid, alkali metal salts of stannic acid, alkali metal salts of germanous acid (Ge (II)) and alkali metal salts of germanic acid (Ge(IV)) can be cited as preferable examples.

The alkali metal salts of silicic acid are, for example, acidic or neutral alkali metal salts of monosilicic acid and condensates thereof and, with regard to examples thereof, monosodium orthosilicate, disodium orthosilicate, trisodium orthosilicate and tetrasodium orthosilicate can be cited.

The alkali metal salts of stannic acid are, for example, acidic or neutral alkali metal salts of monostannic acid and condensates thereof and, with regard to examples thereof, disodium monostannate ($Na_2SnO_3 \cdot xH_2O$, $x = 0$ to 5) and tetrasodium monostannate ($Na_4SnO_4$) can be cited.

The alkali metal salts of germanous acid (Ge (II)) are, for example, acidic or neutral alkali metal salts of monogermanous acid and condensates thereof and, with regard to examples thereof, the monosodium salt of germanous acid ($NaHGeO_2$) can be cited.

The alkali metal salts of germanic acid (Ge(IV)) are, for example, acidic or neutral alkali metal salts of monogermanic acid (Ge(IV)) or condensates thereof and, with regard to examples thereof, monolithium orthogermanate ($LiH_3GeO_4$), disodium orthogermanate, tetrasodium orthogermanate, disodium digermanate ($Na_2Ge_2O_5$), disodium tetragermanate ($Na_2Ge_4O_9$) and disodium pentagermanate ($Na_2Ge_5O_{11}$) can be cited.

The above-mentioned polycondensation catalyst is preferably used at a ratio such that the alkali metal element in the catalyst is present at $1 \times 10^{-8}$ to $5 \times 10^{-5}$ equivalents per mole of the aromatic dihydroxy compound. More preferably, the ratio is $5 \times 10^{-7}$ to $1 \times 10^{-5}$ equivalents on the same basis.

In the polycondensation reaction of the present invention, in addition to the above-mentioned catalyst, a co-catalyst of at least one type chosen from the group consisting of oxoacids and oxides of elements belonging to group 14 of the periodic table can be present as necessary.

The use of such a co-catalyst at a specified ratio can more effectively suppress undesirable side reactions such as branching that easily occur during the polycondensation reaction and the formation of foreign matter and charring that occur inside the equipment during molding, without degrading the reaction rates of a terminal blocking reaction and the polycondensation reaction.

With regard to oxoacids of the elements belonging to group 14 of the periodic table, for example, silicic acid, stannic acid, and germanic acid can be cited.

With regard to oxides of the elements belonging to group 14 of the periodic table, for example, silicon monoxide, silicon dioxide, tin monoxide, tin dioxide, germanium monoxide, germanium dioxide and condensates thereof can be cited.

The co-catalyst is preferably present at a ratio such that the metal element belonging to group 14 of the periodic table in the co-catalyst is present at 50 mole (atom) or less per mole (atom) of the alkali metal element in the polycondensation catalyst. When the ratio of the co-catalyst to the metal element that is used exceeds 50 mole (atom) per mole (atom), the polycondensation reaction rate undesirably decreases.

It is more preferable to use the co-catalyst at a ratio such that the metal element belonging to group 14 of the periodic table in the co-catalyst is present at 0.1 to 30 mole (atom) per mole (atom) of the alkali metal element in the polycondensation catalyst

These catalyst systems have the advantage that, when they are used in a polycondensation reaction, the polycondensation reaction and a termination reaction can be carried out rapidly and to completion. Furthermore, undesirable side reactions such as branching, which are caused in the polycondensation reaction system, can be suppressed to a low level.

A method of crystallizing a low molecular weight aromatic polycarbonate and then subjecting it to solid phase polymerization is known as in, for example, Japanese Patent Application Laid-open No. 2001-11171.

A crystallized aromatic polycarbonate, which is a starting material of the present invention, can be obtained by crystallizing a low molecular weight aromatic polycarbonate, that is to say, an oligomer of an aromatic polycarbonate.

When producing a low molecular weight aromatic polycarbonate, various types of polymerization method can be employed, but a melt polymerization method can be preferably used. With regard to a method of crystallizing an oligomer of an aromatic polycarbonate a known solvent treatment method, thermal crystallization method, etc. can be cited. As a crystallization method in the present invention, the thermal crystallization method is preferred.

In the present invention, as an uncrystallized (i.e. substantially uncrystallized) low molecular weight aromatic polycarbonate, an oligomer or a prepolymer having an intrinsic viscosity [η] of 0.05 to 0.25 (dl/g) can preferably be used. The intrinsic viscosity [η] of the aromatic polycarbonate referred to in the present invention is a value calculated from the viscosity measured in a dichloromethane solution at 20°C.

This aromatic polycarbonate oligomer usually has a degree of crystallinity of approximately 0% or is in an amorphous state having a value close to 0%. When producing a polycarbonate oligomer by a melt polymerization reaction, the molten polycarbonate oligomer immediately after the reaction can preferably be used.

In the present invention the low molecular weight aromatic polycarbonate is crystallized by maintaining it in a temperature range of at least its glass transition temperature (Tg) and less than its melting point. When the temperature is less than the glass transition temperature (Tg) of the low molecular weight aromatic polycarbonate, the crystallization hardly proceeds, and when the temperature is the melting point thereof or higher, the crystals will melt. A preferred temperature for the crystallization treatment is at least a temperature that is 20°C higher than the glass transition temperature of the low molecular weight aromatic polycarbonate and less than the melting point, and more preferably at least a temperature that is 40°C higher than the glass transition temperature of the low molecular weight aromatic polycarbonate and at most a temperature that is 5°C less than the melting point.

The atmosphere for the crystallization treatment can be air, an inert gas or vacuum. The time required for the crystallization depends on the degree of polymerization, the glass transition temperature (Tg) and the amount of the low molecular weight aromatic polycarbonate.

Normally, during the crystallization treatment, the crystals so obtained are simultaneously granulated. With regard to the granulation method, a method in which a predetermined size of a molten material is dropped onto or adhered to a hot plate at a predetermined temperature, a method in which a molten mixture is drawn into a strand and cut into a predetermined length, a method in which a molten material is cast on a film on a hot plate so as to crystallize it and it is then cut or pulverized, a method in which a lump is cooled so as to crystallize it and it is then pulverized, etc. can be employed.

In order to promote crystallization, as described in Japanese Patent Application Laid-open No. 2001-11171, a small amount of an already crystallized aromatic polycarbonate oligomer can be used as a crystallization nucleus. As another crystallization promotion method, a small amount of a carbonate diester, aromatic dihydroxy compound, etc. can be used as a plasticizer.

The crystallized aromatic polycarbonate that has been crystallized by the above-mentioned methods and granulated as necessary is heated as it is in the solid state at a temperature of the melting point of the crystals or less in a flow of an inert gas so as to effect solid phase polymerization to give a highly polymerized aromatic polycarbonate. Although a higher temperature is preferred in terms of the polymerization rate, in order to prevent adhesion between the crystals it is necessary to carry out the polymerization at a temperature lower than the melting point of the crystals. Since the melting point of the crystals rises as the degree of polymerization increases, a method in which the solid phase polymerization temperature is increased according to an increase in the melting point is also preferably employed. With regard to the polymerization time, it is usually a few hours to a few tens of hours.

The polycarbonate resin so produced by solid phase polymerization usually has an intrinsic viscosity [η] of about 0.3 to 1.7 (dl/g), good color, few gel components and excellent moldability, but it can be subjected to a reaction to block the terminal hydroxyl groups or stabilization of the melt viscosity as necessary, which is preferred since the thermal stability during molding and the durability of the polycarbonate resin can be enhanced.

In accordance with the present invention, since the by-product can be separated efficiently, an aromatic polycarbonate can be produced under a flow of an inert gas by an efficient and simplified process.

Brief Description of Drawings

FIG. 1 is a brief sketch of one example of a process for the production of an aromatic polycarbonate by melt polymerization using a scrubber of the present invention, and FIG. 2 is a brief sketch of one example of a process for the production of an aromatic polycarbonate by solid phase polymerization using a scrubber of the present invention. Furthermore, Fig. 3 is a schematic diagram of one embodiment of a spray type scrubber.

Exammples

Examples of the present invention are illustrated below. However, the present invention is in no way limited by these examples.

(Analytical method)

1) Concentration of phenol in the inert gas

A gaseous mixture of inert gas and phenol was sampled, the phenol therein was dissolved in acetonitrile, and the concentration of the phenol in this solution was measured by gas chromatography.

2) Viscosity average molecular weight of polycarbonate

The intrinsic viscosity [η] (dl/g) was measured in dichloromethane at 20°C using an Ubbelohde viscometer, and the viscosity average molecular weight M was determined using the equation below.

$$[\eta] = 1.23 \times 10M^{0.83}$$

3) Melting point

The melting point was measured using a Perkin Elmer DSC7 at a temperature rise rate of 20°C/min. The enthalpy of fusion (ΔH) of the crystals was calculated from the area of the section corresponding to the melting of the crystals.

4) Degree of crystallinity

The degree of crystallinity was calculated using the value for ΔH obtained by the DSC measurement by defining the ΔH of a 100% crystallized polycarbonate as 109.8 J/g (ref. J. Polym. Sci.; Part B: Polym. Phys., Vol. 25 (1979) 1511-1517).

(Example 1)

1,000 g/hr of 2,2'-bis(4-hydroxyphenyl)propane, 967 g/hr of diphenyl carbonate and 0.60 mg/hr of disodium bisphenol A were supplied continuously to a 5L polymerization reactor, and a reaction was carried out at a reaction temperature of 240°C and a reaction pressure of atmospheric pressure while supplying an inert gas by injecting it directly into the liquid phase of the reaction mixture in the polymerization reactor. The polycarbonate so obtained from the reaction was continuously extracted from the polymerization reactor at a rate of 1,180 g/hr. Nitrogen gas was used as an inert gas. The nitrogen gas was heated to 240°C and supplied to the polymerization reactor at a rate of 20 NL/min. The nitrogen gas was supplied by injecting it directly into the liquid phase of the reaction mixture in the polymerization reactor.

Phenol, which was the by-product, was discharged via the reactor vent pipeline accompanying the nitrogen gas together with trace amounts of unreacted diphenyl carbonate and oligomer, and was separated and recovered by a scrubber. The scrubber shown in FIGS. 1 and 3 was used and was operated at atmospheric pressure with a scrubbing liquid temperature of 55°C and a flow rate of 1.5 L/min. This resulted in a concentration of the phenol reaction by-product in the inert gas on the scrubber inlet side of 52.48 wt%, and a concentration of phenol in the inert gas on the scrubber outlet side of 2.04 wt%. When starting continuous production, phenol was added as the scrubbing liquid, and increases in the amount of phenol were subsequently discharged as appropriate via the scrubbing liquid discharge pipeline.

The viscosity average molecular weight of the polycarbonate obtained by the above-mentioned method was 5,220 and the production was carried out continuously in a stable manner.

(Example 2)

A portion of the low molecular weight aromatic polycarbonate obtained in Example 1 was taken out and thermally treated at 180°C for 4 hours under a nitrogen atmosphere. Hardly any crystallization occurred after 1 hour of the thermal treatment, but a degree of crystallinity of 23% was achieved after 4 hours of the thermal treatment. The crystallized polycarbonate so obtained had a viscosity average molecular weight of 5,650, a melting point of 220°C and a $\Delta H$ of 37.9 J/g. It was pulverized and then sieved using 1 mm and 2 mm sieves to collect a powder having a particle size of 1 mm to 2 mm.

The crystallized polycarbonate powder was supplied continuously to a 50 L reactor at 1,000 g/hr, and a solid phase polymerization reaction was carried out at a reaction temperature of 220°C and a reaction pressure of atmospheric pressure while making an inert gas flow into the reactor. In this case, the polycarbonate so obtained from the reaction was continuously extracted from the polymerization reactor at a rate of 970 g/hr. Nitrogen gas was used as an inert gas. The nitrogen gas was heated to 220°C and supplied to the polymerization reactor at a rate of 20 NL/min.

Phenol, which was the reaction by-product, was discharged via the reactor vent pipeline accompanying the nitrogen gas together with trace amounts of unreacted diphenyl carbonate and oligomer, and was separated and recovered by a scrubber. The scrubber shown in FIGS. 2 and 3 was used and was operated at atmospheric pressure with a scrubbing liquid temperature of 50°C and a flow rate of 1.5 L/min. This resulted in a concentration of the phenol reaction by-product in the inert gas on the scrubber inlet side of 0.022 wt%, and a concentration of phenol in the inert gas on the scrubber outlet side of 0.012 wt%. When starting continuous production, phenol was added as the scrubbing liquid, and increases in the amount of phenol were subsequently discharged as appropriate via the scrubbing liquid discharge pipeline.

The viscosity average molecular weight of polycarbonate obtained by the above-mentioned method was 22,300 and the production was carried out continuously in a stable manner.

**Claims**

1. A process for the production of an aromatic polycarbonate in which an aromatic dihydroxy compound and a carbonate diester are subjected to a polycondensation reaction under a flow of an inert gas at a reaction pressure of at least 15 kPa and at most 1,000 kPa, **characterized in that** an alcohol or a phenol that is produced as a by-product of the reaction is separated from the inert gas using a scrubber.

2. The production process according to Claim 1 wherein a scrubbing liquid used for the scrubber comprises principally a compound X that is the same as either the alcohol or the phenol that is produced as a by-product of the reaction between the aromatic dihydroxy compound and the carbonate diester.

3. The production process according to Claim 2 wherein the temperature of the scrubbing liquid that is supplied to the scrubber is at least the solidifying point of the compound X and at most the temperature at which the vapor pressure of the compound X is 40 kPa.

4. The production process according to any one of Claims 1 to 3 wherein the carbonate diester is an aromatic carbonate diester.

5. The production process according to either one of Claims 2 or 3 wherein the compound X is phenol.

6. A process for the production of an aromatic polycarbonate in which a crystallized aromatic polycarbonate is subjected to a polycondensation reaction under a flow of an inert gas at a reaction pressure of at least 15 kPa and at most 1,000 kPa, **characterized in that** an alcohol or a phenol that is produced as a by-product of the reaction is separated from the inert gas using a scrubber.

7. The production process according to Claim 6 wherein a scrubbing liquid used for the scrubber comprises principally a compound Y that is the same as either the alcohol or the phenol that is produced as a by-product of the reaction of the crystallized aromatic polycarbonate.

8. The production process according to Claim 7 wherein the temperature of the scrubbing liquid that is supplied to the scrubber is at least the solidifying point of the compound Y and at most the temperature at which the vapor pressure of the compound Y is 40 kPa.

9. The production process according to either one of Claims 7 or 8 wherein the compound Y is phenol.

# FIG.1

# FIG.2

# FIG.3

EP 1 304 344 A1

## INTERNATIONAL SEARCH REPORT

International application No.

PCT/JP01/06227

**A. CLASSIFICATION OF SUBJECT MATTER**
Int.Cl$^7$  C08G64/30

According to International Patent Classification (IPC) or to both national classification and IPC

**B. FIELDS SEARCHED**

Minimum documentation searched (classification system followed by classification symbols)
Int.Cl$^7$  C08G64/00-64/42

Documentation searched other than minimum documentation to the extent that such documents are included in the fields searched
Jitsuyo Shinan Koho      1926-2001    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-333447 A (Teijin Limited), 17 December, 1996 (17.12.96), column 1, lines 2 to 8   (Family: none) | 1-9 |

☐ Further documents are listed in the continuation of Box C.    ☐ See patent family annex.

| | |
|---|---|
| \* Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>15 October, 2001 (15.10.01) | Date of mailing of the international search report<br>23 October, 2001 (23.10.01) |
| Name and mailing address of the ISA/<br>Japanese Patent Office | Authorized officer |
| Facsimile No. | Telephone No. |

Form PCT/ISA/210 (second sheet) (July 1992)

14